# EUROPÄISCHE PATENTANMELDUNG

(11) **EP 3 865 736 A1**
(43) Veröffentlichungstag der Anmeldung: **18.08.2021**
(21) Anmeldenummer: 21151481.5
(22) Anmeldetag: 14.01.2021
(51) Int. Cl.: F16H 63/34

(54) **PARKSPERRENRAD, PARKSPERRE UND VERFAHREN ZUM HERSTELLEN EINES PARKSPERRENRADES**

(30) Priorität: 12.02.2020 DE 102020201729
(71) Anmelder: Robert Bosch GmbH, 70442 Stuttgart (DE)
(72) Erfinder: Schlittenbauer, Tobias, 71679 Asperg (DE); Mohamed, Wael, 71282 Hemmingen (DE); Mohamed, Mohamad, 71701 Schwieberdingen (DE)

(57) **Zusammenfassung**

Die Erfindung betrifft ein Parksperrenrad, mit einer inneren ersten Komponente, wobei die erste Komponente ringförmig ausgestaltet ist, und wobei die erste Komponente auf einer Getriebewelle anordenbar oder angeordnet ist; einer äußeren zweiten Komponente, wobei die zweite Komponente ringförmig ausgestaltet ist, und wobei die zweite Komponente an einer radial äußeren Seite des Parksperrenrades eine Vielzahl von Nuten aufweist, wobei die Nuten derart ausgebildet sind, dass eine Klinke mit den Nuten in Eingriff gebracht werden kann; und einer Verbindungseinrichtung, welche aus einem elastischen Material ausgebildet ist, wobei die erste Komponente mit der zweiten Komponente mittels der Verbindungseinrichtung gekoppelt ist.

## Beschreibung

Die vorliegende Erfindung betrifft ein Parksperrenrad. Die Erfindung betrifft weiter eine Parksperre. Schließlich betrifft die Erfindung ein Verfahren zum Herstellen eines Parksperrenrades.

### Stand der Technik

Im Stillstand soll ein Fahrzeug gegen Wegrollen gesichert werden. Insbesondere darf sich das Fahrzeug auch bei stärkeren Gefällen nicht bewegen. Bei Fahrzeugen mit einem Handschaltgetriebe kann hierzu ein Gang eingelegt werden, wobei durch den entstehenden Kraftfluss zu den Antriebsrädern das Wegfahren des Fahrzeugs vermieden wird. Für Automatikgetriebe ist dies jedoch nicht möglich. Daher kommen typischerweise Parksperren zum Einsatz, welche auf mechanische Weise das Wegfahren des Fahrzeugs verhindern. Die Parksperre kann durch den Fahrer aktiviert werden, indem dieser den Wählhebel in die entsprechende Stellung bringt.

Beim Aktivieren der Parksperre wird eine Sperrklinke mechanisch oder hydraulisch in eine Sperrposition gebracht. Die Sperrklinke greift in Nuten eines Parksperrenrades ein, wobei das Parksperrenrad auf der Getriebewelle angeordnet ist. Wenn die Parksperre wieder gelöst wird, bringt eine Rückstellfeder die Sperrklinke wieder in den Ausgangszustand, sodass diese nicht mehr in die Nuten des Parksperrenrades eingreift.

Sowohl die Klinke als auch das Parksperrenrad sind typischerweise aus Metall ausgebildet und haben dadurch eine sehr hohe Steifigkeit. Dadurch entsteht im gesamten Getriebe ein sehr hohes Drehmoment. Dies kann nachteilige Effekte für Getriebeelemente haben. Etwa können Steckverzahnung, Laufverzahnung, Lager und andere im Kraftfluss bewegliche Elemente beeinträchtigt, beschädigt oder sogar zerstört werden.

Aus der DE 19535239 C1 ist eine Parksperre bekannt, wobei in der Eingriffsstellung einer Sperrklinke in ein Eingriffsrad eventuell noch vorhandene Rotationsenergie durch elastische Verformung des Eingriffsrads abgebaut wird. Hierzu können verformbare Speichen vorgesehen sein.

### Offenbarung der Erfindung

Die Erfindung stellt ein Parksperrenrad mit den Merkmalen des Patentanspruchs 1, eine Parksperre mit den Merkmalen des Patenanspruchs 9 und ein Verfahren zum Herstellen eines Parksperrenrades mit den Merkmalen des Patentanspruchs 10 bereit.

Bevorzugte Ausführungsformen sind Gegenstand der jeweiligen Unteransprüche.

Gemäß einem ersten Aspekt betrifft die Erfindung demnach ein Parksperrenrad, mit einer inneren ersten Komponente, wobei die erste Komponente ringförmig ausgestaltet ist, und wobei die erste Komponente auf einer Getriebewelle anordenbar oder angeordnet ist. Das Parksperrenrad umfasst weiter eine äußere zweite Komponente, wobei die zweite Komponente ringförmig ausgestaltet ist, und wobei die zweite Komponente an einer radial äußeren Seite des Parksperrenrades eine Vielzahl von Nuten aufweist, wobei die Nuten derart ausgebildet sind, dass eine Klinke mit den Nuten in Eingriff gebracht werden kann. Das Parksperrenrad umfasst schließlich eine Verbindungseinrichtung, welche aus einem elastischen Material ausgebildet ist, wobei die erste Komponente mit der zweiten Komponente mittels der Verbindungseinrichtung gekoppelt ist.

Gemäß einem zweiten Aspekt betrifft die Erfindung eine Parksperre, mit einem erfindungsgemäßen Parksperrenrad sowie einer Klinke, welche dazu ausgebildet ist, mit den Nuten des Parksperrenrades in Eingriff gebracht zu werden.

Gemäß einem dritten Aspekt betrifft die Erfindung ein Verfahren zum Herstellen eines Parksperrenrades. Eine innere erste Komponente wird bereitgestellt, wobei die erste Komponente ringförmig ausgestaltet ist, und wobei die erste Komponente auf einer Getriebewelle angeordnet wird. Eine Verbindungseinrichtung wird an der ersten Komponente angebracht, wobei die Verbindungseinrichtung zumindest teilweise aus einem elastischen Material ausgebildet ist. Eine äußere zweite Komponente wird an der Verbindungseinrichtung angebracht, sodass die erste Komponente mit der zweiten Komponente mittels der Verbindungseinrichtung gekoppelt wird, wobei die zweite Komponente ringförmig ausgestaltet ist, und wobei die zweite Komponente an einer radial äußeren Seite des Parksperrenrades eine Vielzahl von Nuten aufweist, wobei die Nuten derart ausgebildet sind, dass eine Klinke mit den Nuten in Eingriff gebracht werden kann.

### Vorteile der Erfindung

Das erfindungsgemäße Parksperrenrad weist eine Verbindungseinrichtung aus einem elastischen Material auf, welche innere und äußere Komponenten miteinander verbindet. Beim Einlegen der Klinke kann ein hohes Drehmoment entstehen. Die Verbindungseinrichtung aus dem elastischen Material dient als Dämpfer und dämpft dadurch die hohen auftretenden Drehmomente. Der Dämpfer wird beim Einlegen der Klinke zuerst in Drehrichtung, d.h. senkrecht zur radialen Richtung, elastisch verformt, bevor das Drehmoment auf die innere Komponente übertragen wird.

Weiter ist die als Dämpfer ausgebildete Verbindungseinrichtung vollständig in das Parksperrenrad selbst integriert. Dadurch sind keine zusätzlichen mechanischen Komponenten erforderlich, welche verschleißanfällig sein können.

Das erfindungsgemäße Parksperrenrad zeichnet sich somit durch gute Dämpfungseigenschaften und eine hohe Haltbarkeit aus.

Gemäß einer Weiterbildung des Parksperrenrades ist die Verbindungseinrichtung ringförmig ausgestaltet. Die Verbindungseinrichtung kann beispielsweise die Form eines Gummiringes aufweisen.

Gemäß einer Weiterbildung des Parksperrenrades weist die Verbindungseinrichtung eine Vielzahl von Verbindungselementen auf, welche voneinander beabstandet angeordnet sind und die erste Komponente mit der zweiten Komponente verbinden. Zwischen den Verbindungselementen der Verbindungseinrichtung kann ein Hohlraum ausgebildet sein. Dadurch kann gegebenenfalls eine gezieltere Verformung der Verbindungselemente erreicht werden, sodass die Dämpfungseigenschaften weiter verbessert werden können.

Gemäß einer Weiterbildung des Parksperrenrades ist die Verbindungseinrichtung zumindest teilweise aus Elastomeren ausgebildet. Die Verbindungseinrichtung kann zumindest teilweise aus einem entropieelastischen bzw. gummielastischen Material ausgebildet sein. Polymere umfassen Makromoleküle oder Molekülsegmente, welche sich im Grundzustand in einem Knäuelzustand befinden. Bei Belastung werden die Makromoleküle bzw. Molekülsegmente gestreckt. Entropieelastizität oder Gummielastizität bezeichnet die für Polymere charakteristische Eigenschaft, nach der Streckung in den entropisch günstigeren Grundzustand zurückzukehren. Bei einer Dehnung nimmt die Entropie bei gummielastischen Materialien ab. Im Gegensatz dazu erhöht sich bei Hartstoffen, etwa Metallen, die innere Energie.

Gemäß einer Weiterbildung des Parksperrenrades ist die Verbindungseinrichtung zumindest teilweise aus Naturkautschuk oder Synthesekautschuk ausgebildet. Die Verbindungseinrichtung kann auch zumindest teilweise aus Porengummi, Zellgummi, Moosgummi, Schwammgummi, Schaumgummi oder dergleichen bestehen.

Gemäß einer Weiterbildung des Parksperrenrades sind die erste Komponente und die zweite Komponente zumindest teilweise aus Metall ausgebildet. Vorzugsweise sind sowohl die erste Komponente als auch die zweite Komponente vollständig aus Metall ausgebildet.

Gemäß einer Weiterbildung des Parksperrenrades umfassen die erste Komponente und/oder die zweite Komponente mehrere Segmente. Beispielsweise können die erste Komponente und/oder die zweite Komponente aus halbringförmigen Segmenten bestehen, welche beim Montieren des Parksperrenrades auf der Getriebewelle miteinander verbunden werden.

Gemäß einer Weiterbildung weist das Parksperrenrad eine Schutzhülle auf, welche die erste Komponente, die zweite Komponente und die Verbindungseinrichtung zumindest teilweise umgibt. Insbesondere kann die Schutzhülle die elastische Verbindungseinrichtung vor äußeren chemischen oder physikalischen Einflüssen schützen und dadurch die Verbesserung der Verformungseigenschaften über lange Zeit hinweg sicherstellen. Die Schutzhülle kann zumindest teilweise aus Metall ausgebildet sein.

Gemäß einer Weiterbildung des Parksperrenrades weist die erste Komponente keine direkte Verbindung mit der zweiten Komponente auf. Insbesondere ist die erste Komponente vorzugsweise lediglich über die Verbindungseinrichtung mit der zweiten Komponente verbunden.

Es können sich die beiden Komponenten unter hoher Last, an bestimmten Stellen, berühren. Diese mechanischen Anschlagsflächen werden benötigt um das Gummielement in Missbrauchsfälle zu schützen.

Gemäß einer Weiterbildung des Parksperrenrades weisen die erste Komponente und/oder die zweite Komponente eine Nut zur Aufnahme der Verbindungseinrichtung auf. Insbesondere kann die Verbindungseinrichtung ringförmig ausgestaltet sein und vollständig in die Nut eingreifen. Dadurch wird ein Verrutschen der Verbindungeinrichtung verhindert.

Gemäß einer Weiterbildung der Parksperre ist die Klinke aus Metall ausgebildet.

### Kurze Beschreibung der Zeichnungen

Es zeigen:
- Figur 1: eine schematische Querschnittsansicht einer Parksperre gemäß einer Ausführungsform der Erfindung im Parkzustand des Fahrzeugs;
- Figur 2: eine schematische Querschnittsansicht der in Figur 1 gezeigten Parksperre im Fahrzustand des Fahrzeugs;
- Figur 3: eine schematische Schrägansicht einer Klinke einer Parksperre;
- Figur 4: eine schematische Querschnittsansicht eines Parksperrenrades gemäß einer Ausführungsform der Erfindung; und
- Figur 5: ein Flussdiagramm eines Verfahrens zum Herstellen eines Parksperrenrades gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

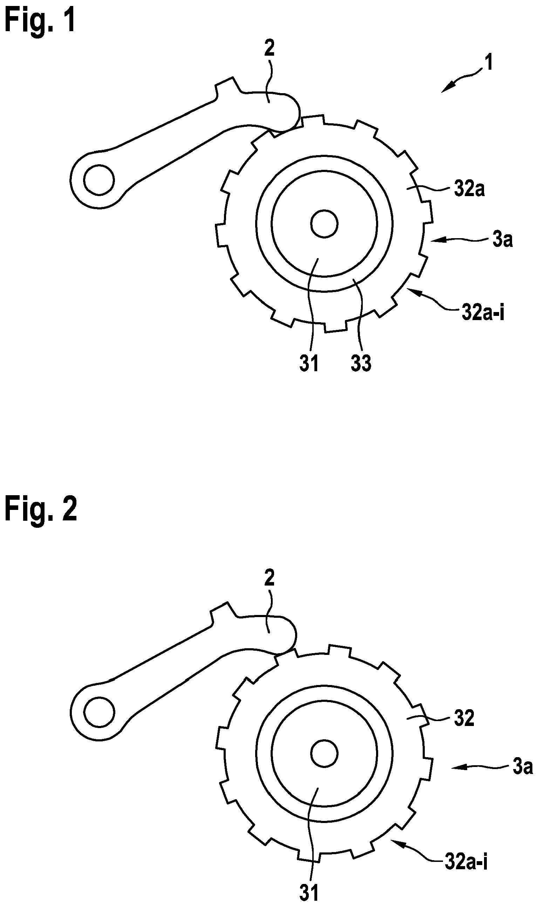

Figur 1 zeigt eine schematische Querschnittsansicht einer Parksperre 1 im Parkzustand des Fahrzeugs. Die Parksperre 1 umfasst eine Klinke 2 sowie ein Parksperrenrad 3a. Das Parksperrenrad 3a weist eine erste Komponente 31, eine zweite Komponente 32a und eine Verbindungseinrichtung bzw. ein Verbindungselement 33 auf. Die Verbindungseinrichtung 33 ist ein Dämpfungselement und kann zumindest teilweise aus einem Elastomer, insbesondere Gummi ausgebildet sein.

Die erste Komponente 31 und die zweite Komponente 32a sind jeweils aus Metall gefertigt. Die erste Komponente 31 und zweite Komponente 32a sind im Wesentlichen ringförmig ausgebildet, wobei die zweite Komponente 32a eine Vielzahl von Nuten 32a-i aufweist. Die Erfindung ist hierbei nicht auf eine bestimmte Anzahl von Nuten 32a-i beschränkt. Insbesondere kann die zweite Komponente 32a eine größere oder eine geringere Anzahl an Nuten 32a-i aufweisen, als in Figur 1 illustriert.

Die Verbindungseinrichtung 33 ist ebenfalls ringförmig ausgebildet und verbindet die erste Komponente 31 mit der zweiten Komponente 32a. Die Verbindungseinrichtung 33 besteht zumindest teilweise aus einem elastischen Material. Vorzugsweise ist die Verbindungseinrichtung 33 vollständig aus einem elastischen Material gefertigt.

In der in Figur 1 gezeigten Stellung der Parksperre 1 greift die Klinke 2 in eine Nut 32a-i des Parksperrenrades 3a ein. Die Klinke 2 wird hierzu durch einen (nicht gezeigten) Mechanismus der Parksperre 1 in die Eingriffsposition gebracht. Hierzu werden durch Auswählen einer Parkstellung am Wählhebel durch einen Fahrer des Fahrzeugs mechanische oder hydraulische Aktoren angesteuert, welche entgegen einer Vorspannung eine Kraft auf die Klinke 2 ausüben und diese dadurch in Richtung des Parksperrenrades 3a bewegen. Eine Nase der Klinke 2 wird dadurch mit einer der Nuten 32a-i in Eingriff gebracht. Die erste Komponente 31 ist auf einer Getriebewelle des Fahrzeugs angeordnet und drehfest mit der Getriebewelle verbunden. Da die Klinke 2 in eine der Nuten 32a-i eingreift wird eine Rotation der Getriebewelle verhindert.

Figur 2 zeigt eine schematische Querschnittsansicht der in Figur 1 gezeigten Parksperre 1 im Fahrzustand des Fahrzeugs. Falls der Fahrer des Fahrzeugs durch eine entsprechende Auswahl wieder einen anderen Modus als den Parkmodus auswählt, werden die Aktoren derart angesteuert, dass die Klinke 2 aufgrund der Vorspannung in die Ausgangsposition gebracht wird und dadurch nicht mehr in eine der Nuten 32a-i eingreift. Eine Rotation des Parksperrenrades 3a und dadurch der Getriebewelle, auf welcher das Parksperrenrad 3a angeordnet ist, wird durch die Klinke 2 nicht mehr verhindert.

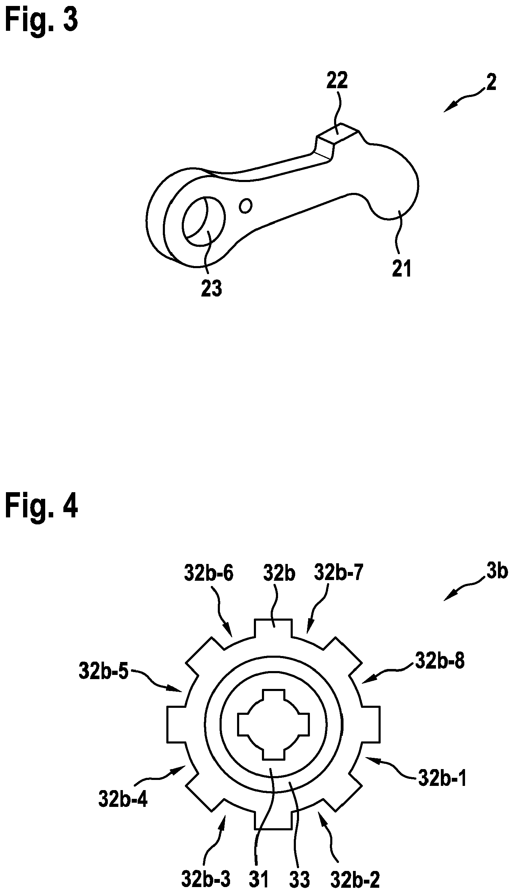

Figur 3 zeigt eine schematische Schrägansicht einer Klinke 2 einer Parksperre 1. Die Klinke 2 umfasst ein Loch 23 zur Befestigung an einem Stift, um welchen sich die Klinke 2 drehen kann. Die Klinke 2 umfasst weiter eine erste Nase 22, welche durch einen Aktor entgegen einer Vorspannung in Richtung der Nuten 32a-i des Parksperrenrades 3a bewegt werden kann. Hierzu umfasst die Klinke 2 weiter eine zweite Nase 21, welche in die Nuten 32a-i des Parksperrenrades 3a eingreifen kann.

Figur 4 zeigt eine schematische Querschnittsansicht eines weiteren Parksperrenrades 3b. Das Parksperrenrad 3b umfasst eine erste Komponente 31 und eine zweite Komponente 32b, welche über eine Verbindungseinrichtung 33 verbunden sind. Die erste Komponente 31 kann formschlüssig und/oder kraftschlüssig auf einer Getriebewelle angeordnet werden. Die zweite Komponente 32b umfasst eine Vielzahl von Nuten 32b-1 bis 32b-8, wobei eine Klinke 2 mit den Nuten 32b-1 bis 32b-8 in Eingriff gebracht werden kann. Während in der gezeigten Ausführungsform acht Nuten 32b-1 bis 32b-8 vorgesehen sind, ist die Erfindung nicht auf eine derartige Ausführungsform begrenzt. Die Verbindungseinrichtung 33 ist aus einem elastischen Material ausgebildet.

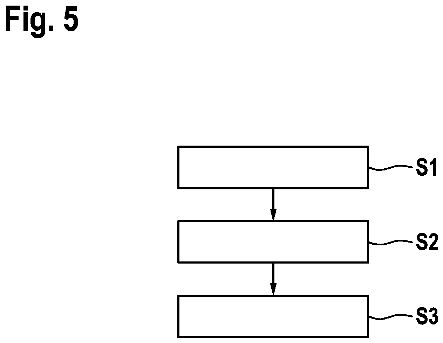

Figur 5 zeigt ein Flussdiagramm eines Verfahrens zum Herstellen eines Parksperrenrades 3a, 3b.

In einem ersten Verfahrensschritt S1 wird eine innere erste Komponente 31 hergestellt, welche ringförmig ausgestaltet ist. Die erste Komponente wird auf einer Getriebewelle angeordnet.

In einem zweiten Verfahrensschritt S2 wird an der ersten Komponente 31 eine Verbindungseinrichtung 33 angeordnet, welche als Dämpfungselement dient. Die Verbindungseinrichtung 33 besteht aus einem elastischen Material, etwa Gummi. Vorzugsweise ist die Verbindungseinrichtung 33 ebenfalls ringförmig ausgestaltet.

Gemäß weiteren Ausführungsformen kann die Verbindungseinrichtung 33 mehrere Verbindungselemente aufweisen, welche voneinander beabstandet angeordnet sind und die erste Komponente 31 mit der zweiten Komponente 32a, 32b verbinden.

In einem weiteren Verfahrensschritt S3 wird an der Verbindungseinrichtung 33 eine äußere zweite Komponente 32a, 32b angeordnet. Diese ist ebenfalls ringförmig ausgestaltet und weist an der radial äußeren Seite eine Vielzahl von Nuten 32a-i, 32b-i auf, sodass im montierten Zustand eine Klinke 2 mit den Nuten 32a-i, 32b-i in Eingriff gebracht werden kann. Die zweite Komponente 32a, 32b ist vorzugsweise lediglich über die Verbindungseinrichtung 33 mittelbar mit der ersten Komponente 31 verbunden, weist jedoch keine direkte Kontaktstelle auf.

Die erste Komponente 31 und die zweite Komponente 32a, 32b können jeweils aus Metall ausgebildet sein. Weiter kann beim Herstellen des Parksperrenrades 3a, 3b eine Schutzhülle angebracht werden, welche die erste Komponente 31, die zweite Komponente 32a, 32b und die Verbindungseinrichtung 33 zumindest teilweise umgibt.

Weiter kann vorgesehen sein, in der ersten Komponente 31 und/oder in der zweiten Komponente 32a, 32b eine Nut vorzusehen, wobei die Verbindungseinrichtung 33 in die Nut eingepasst wird.

Die Verfahrensschritte S1 bis S3 müssen nicht in der genannten Reihenfolge ausgeführt werden. Insbesondere kann auch zuerst das Parksperrenrad 3a, 3b vollständig montiert werden, bevor dieses auf der Getriebewelle angebracht wird.

Weiter kann vorgesehen sein, dass die erste Komponente 31 und/oder die zweite Komponente 32 aus Elementen bestehen, welche beim Herstellen des Parksperrenrades miteinander verbunden werden. Die Komponenten können etwa durch Passung, Verschrauben oder Verschweißen miteinander verbunden werden.

## Patentansprüche

1. Parksperrenrad (3a; 3b), mit
einer inneren ersten Komponente (31), wobei die erste Komponente (31) ringförmig ausgestaltet ist, und wobei die erste Komponente (31) auf einer Getriebewelle anordenbar oder angeordnet ist;
einer äußeren zweiten Komponente (32a; 32b), wobei die zweite Komponente ringförmig ausgestaltet ist, und wobei die zweite Komponente an einer radial äußeren Seite des Parksperrenrades eine Vielzahl von Nuten (32a-i; 32b-i) aufweist, wobei die Nuten (32a-i; 32b-i) derart ausgebildet sind, dass eine Klinke (2) mit den Nuten (32a-i; 32b-i) in Eingriff gebracht werden kann; und
einer Verbindungseinrichtung (33), welche aus einem elastischen Material ausgebildet ist, wobei die erste Komponente (31) mit der zweiten Komponente (32a; 32b) mittels der Verbindungseinrichtung (33) gekoppelt ist.

2. Parksperrenrad (3a; 3b) nach Anspruch 1, wobei die Verbindungseinrichtung (33) ringförmig ausgestaltet ist.

3. Parksperrenrad (3a; 3b) nach Anspruch 1, wobei die Verbindungseinrichtung (33) eine Vielzahl von Verbindungselementen aufweist, welche voneinander beabstandet angeordnet sind und die erste Komponente (31) mit der zweiten Komponente (32a; 32b) verbinden.

4. Parksperrenrad (3a; 3b) nach einem der vorangehenden Ansprüche, wobei die Verbindungseinrichtung (33) zumindest teilweise aus Elastomeren ausgebildet ist.

5. Parksperrenrad (3a; 3b) nach einem der vorangehenden Ansprüche, wobei die erste Komponente (31) und die zweite Komponente (32a; 32b) zumindest teilweise aus Metall ausgebildet sind.

6. Parksperrenrad (3a; 3b) nach einem der vorangehenden Ansprüche, weiter mit einer Schutzhülle, welche die erste Komponente (31), die zweite Komponente (32a; 32b) und die Verbindungseinrichtung (33) zumindest teilweise umgibt.

7. Parksperrenrad (3a; 3b) nach einem der vorangehenden Ansprüche, wobei die erste Komponente (31) keine direkte Verbindung mit der zweiten Komponente (32a; 32b) aufweist.

8. Parksperrenrad (3a; 3b) nach einem der vorangehenden Ansprüche, wobei die erste Komponente (31) und/oder die zweite Komponente (32a; 32b) eine Nut zur Aufnahme der Verbindungseinrichtung (33) aufweisen.

9. Parksperre (1), mit:
einem Parksperrenrad (3a; 3b) gemäß einem der Ansprüche 1 bis 8; und
einer Klinke (2), welche dazu ausgebildet ist, mit den Nuten (32a-i; 32b-i) des Parksperrenrades in Eingriff gebracht zu werden.

10. Verfahren zum Herstellen eines Parksperrenrades (3a; 3b), mit den Schritten:
Bereitstellen einer inneren ersten Komponente (31), wobei die erste Komponente (31) ringförmig ausgestaltet ist, und wobei die erste Komponente (31) auf einer Getriebewelle angeordnet wird;
Anbringen einer Verbindungseinrichtung (33) an der ersten Komponente (31), wobei die Verbindungseinrichtung (33) zumindest teilweise aus einem elastischen Material ausgebildet ist; und
Anbringen einer äußeren zweiten Komponente (32a; 32b) an der Verbindungseinrichtung (33), sodass die erste Komponente (31) mit der zweiten Komponente (32a; 32b) mittels der Verbindungseinrichtung (33) gekoppelt wird;
wobei die zweite Komponente ringförmig ausgestaltet ist, und wobei die zweite Komponente an einer radial äußeren Seite des Parksperrenrades eine Vielzahl von Nuten (32a-i; 32b-i) aufweist, wobei die Nuten (32a-i; 32b-i) derart ausgebildet sind, dass eine Klinke (2) mit den Nuten (32a-i; 32b-i) in Eingriff gebracht werden kann.
